# EUROPEAN PATENT SPECIFICATION

(11) **EP 2 225 865 B1**
(45) Date of publication and mention of the grant of the patent: **11.05.2016**
(21) Application number: 07864920.9
(22) Date of filing: 29.11.2007
(51) Int. Cl.: H04L 29/06, H04L 29/08

(54) **CONTENT BASED ROUTING WITH HIGH ASSURANCE MLS**
INHALTSBASIERTES ROUTING MIT HOCHSICHEREM MLS
ROUTAGE À BASE DE CONTENU AVEC GARANTIE DE MLS ÉLEVÉE

(43) Date of publication of application: 08.09.2010
(73) Proprietor: The Boeing Company, Chicago, IL 60606-1596 (US)
(72) Inventor: WINIG, Robert J., Rancho Palos Verdes California 90275 (US)
(74) Representative: Witte, Weller & Partner Patentanwälte mbB
(86) International application number: PCT/US2007/085968
(87) International publication number: WO 2009/070167

(56) References cited:
- EP-A- 0 375 138
- WO-A-03/098409
- US-A1- 2005 033 990
- US-A1- 2006 112 188

## Description

### TECHNICAL FIELD

The present disclosure relates to content based routing with high assurance MLS (multi-level security).

### BACKGROUND

Providing specific content to a requesting system, such as any system that requires inputs from an external source, over a network in a timely and secure manner requires knowledge of the interests of the requesting system, the security level of the information being sent over the network, and the security level of the network on which the requesting system resides. Conventional network communications are problematic because they can not provide specific metadata or content to a requesting system even if the requesting system is at the appropriate security level. Conventional network communications can only provide the entire data packets of information classified at the highest security level of any content contained within the entire data packets. Conventional network communications also can not individually classify the metadata or content within data packets at a specific security level to provide the requesting system with the specific content requested.

Conventional network communications are, for example, shown in documents US 2006/0112188 A1, WO 03/098409 A1 and EP 0 375 138 A2.

### SUMMARY

This summary introduces simplified features and concepts of content based routing with high assurance MLS (multi-level security) which are further described below in the Detailed Description. This summary is not intended to identify essential features of the claimed subject matter, nor is it intended for use in determining the scope of the claimed subject matter.

In an embodiment of content based routing with high assurance MLS,
a security component receives content from a content provider. The security component identifies a security level of content metadata located within the content received from the content provider. A content router receives a content descriptor from the content provider and an interest profile from a requesting system. The content router utilizes algorithms to create routing tables based on metadata in the content descriptor, and the interest profile. The content router provides the content metadata to the requesting system based on the interest profile. A content filter filters or sanitizes the content metadata according to a security level of the requesting system before providing the content metadata to the requesting system.

### BRIEF DESCRIPTION OF THE DRAWINGS

Embodiments of content based routing with high assurance MLS (multi-level security) are described with reference to the following drawings. The same numbers are used throughout the drawings to reference like features and components:
Fig. 1 illustrates an example system in which embodiments of content based routing with high assurance MLS can be implemented.
Fig. 2 illustrates another example system in which embodiments of content based routing with high assurance MLS can be implemented.
Fig. 3 illustrates exemplary method(s) for content based routing with high assurance MLS.
Fig. 4 illustrates am example computing-based device in which embodiments of content based routing with high assurance MLS can be implemented.

### DETAILED DESCRIPTION

Content Based Routing with High Assurance MLS (multi-level security) methods and systems are described in which embodiments provide communication of content from a content provider to a requesting system, such as any system that requires inputs from an external source. Embodiments of content based routing with high assurance MLS can also be implemented to assist in providing content to the requesting system from the content provider.

In one embodiment, a security component receives content from a content provider. The security component can identify a security level of content metadata located within the content received from the content provider. A content router receives a content descriptor from the content provider and an interest profile from a requesting system. The content router can utilize algorithms to create routing tables based on metadata in the content descriptor, and the interest profile. The content router can provide the content metadata to the requesting system based on the interest profile. A content filter can filter and/or sanitize the content metadata according to a security level of the requesting system before providing the content metadata to the requesting system.

While features and concepts of the described systems and methods for content based routing with high assurance MLS can be implemented in any number of different environments, systems, and/or other configurations, embodiments of content based routing with high assurance MLS are described in the context of the following exemplary environment and system architectures.

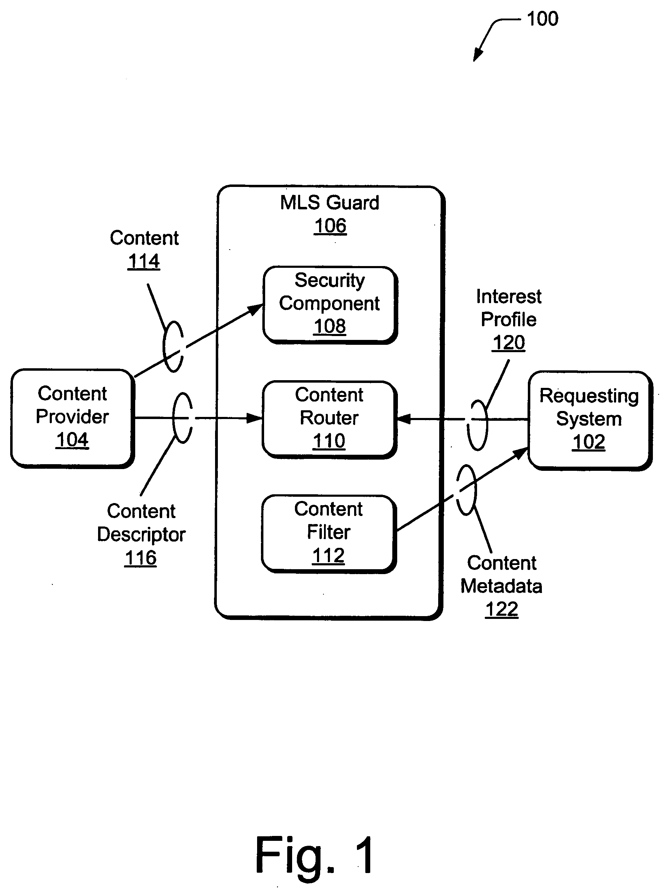

Fig. 1 illustrates an example system 100 in which embodiments of content based routing with high assurance MLS can be implemented. The system 100 includes a requesting system 102, such as any system that requires inputs from an external source like a data fusion engine, a content provider 104, a MLS guard 106, a security component 108, a content router 110, and a content filter 112 to filter and/or sanitize content metadata 122 located within the content 114 and provide the content metadata 122 to the requesting system 102. In this example, the content router 110 can receive an interest profile 120 from the requesting system 102, and a content descriptor 116 from the content provider 104.

The requesting system 102, such as any system that requires inputs from an external source, can communicate an interest profile 120 to the content router 110. The requesting system 102 can receive content metadata 122 from the content filter 112 after it is filtered and/or sanitized according to a security level of the requesting system 102. In this example, the security level of the requesting system 102 is equivalent to the security level of a network on which the requesting system 102 is located. Further, in this example, the interest profile 120 defines the desired content and/or metadata. In an embodiment, the content router 110 can provide the content metadata 122 directly to the requesting system 102 in an event that the security level of the content metadata 122 is not higher than the security level of the requesting system 102. In another example, the requesting system 102 can be a subscriber in a service oriented architecture environment. In another embodiment, the requesting system 102 can receive the content 114 and/or the content metadata 122.

The content provider 104 can communicate a content descriptor 116 to the content router 110, and communicate content 114 to the security component 108. In this example, the content 114 can be at least one of readable text, XML data or binary data. Further, in this example, the content descriptor defines the provided content and/or metadata. In another example, the content descriptor is a publisher in a service oriented architecture environment. In an embodiment, at least one additional content provider can communicate a content descriptor to the content router 110, and communicate content 114 to the security component 108.

The security component 108 can receive content 114 from the content provider 104 and can identify a security level of the content metadata 122 received from the content provider 104. The security component 108 can identify the security level of the content metadata 122 based on a security classification that is defined in a classification guide. The security component 108 can identify or tag the content metadata 122 manually, or use a variety of identifiers or taggers that can place a security classification on the content metadata 122. The security component 108 can utilize a security protocol to communicate the content metadata 122 to the content router 110.

The content router 110 can receive the content descriptor 116 from the content provider 104 and the interest profile 120 from the requesting system 102. The content router can utilize algorithms to create routing tables based on the metadata in the content descriptor 116, and the interest profile 120, and provide the content metadata 122 to the requesting system 102 based on the interest profile 120. Further, in this embodiment, the content metadata 122 will be multicast to interested requesting systems 102 or subscribers whose interest profile 120 matches the metadata content 122 in the content descriptor 116.

The content filter 112 can filter and/or sanitize the content metadata 122 according to a level of security of the requesting system 102 before providing the content metadata 122 to the requesting system 102. The content filter 112 can utilize MLS guard policies to filter and/or sanitize the content metadata 122 according to the security level of the requesting system 102.

In an embodiment, the security component 108, content router 110, and content filter 112 can be housed within a multi-level security hardware system, such as an MLS Guard 106. The MLS guard 106 can provide two-way communications and can communicate content metadata 122 from a content provider 104 at a low security level to a requesting system 102 at a high security level, and from a content provider 104 at a high security level to requesting system 102 at a low security level. Further, in this embodiment, the MLS guard 106 can operate at the highest level of assurance or the highest evaluation accreditation level such as common criteria EAL7.

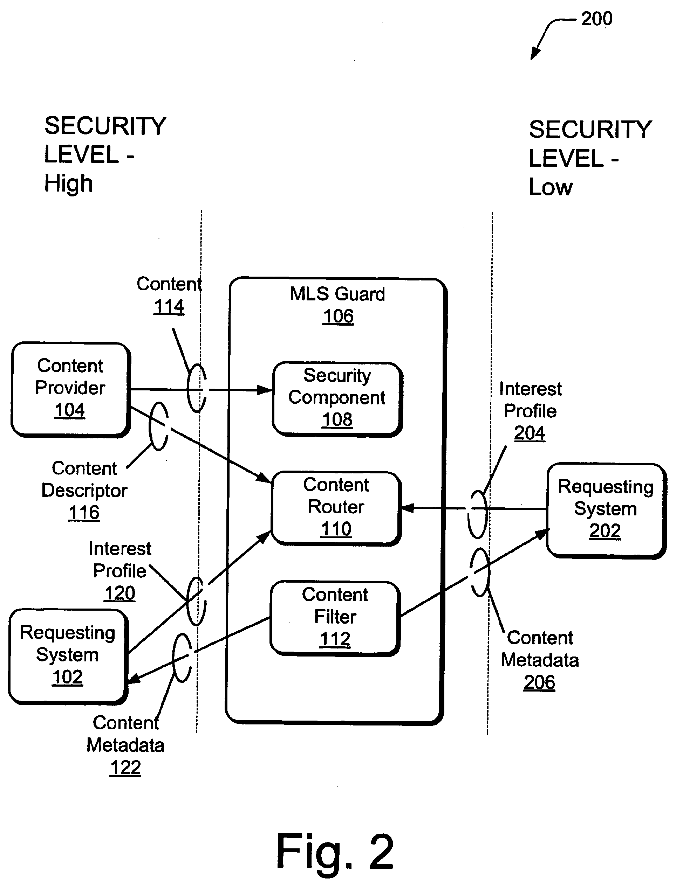

Fig. 2 further illustrates an example system 200 in which embodiments of content based routing with high assurance MLS can be implemented. The system 200 includes the requesting system 102, the content provider 104, the MLS guard 106, the security component 108, the content router 110, at least one additional requesting system 202, and the content filter 112 as described above with reference to Fig. 1 to filter and/or sanitize content metadata 122 and provide the content metadata 122 to the requesting system 102. In this example, the at least one additional requesting system 202 can communicate an interest profile 204 to the content router 110. The content router 110 can create routing tables based on the interest profile of the at least one additional requesting system 202 and the metadata in the content descriptor 116 of each content provider 104, and provide content metadata 206 to the at least one additional requesting system 202 based on the interest profile 204. Further, in this embodiment, the content filter 112 can filter and/or sanitize the content metadata 206 according to a security level of the at least one additional requesting system 202 before the content metadata 206 is received by the at least one additional requesting system 202. Also, in this embodiment, these operations described can be simultaneously performed with the functions as described in figure 1.

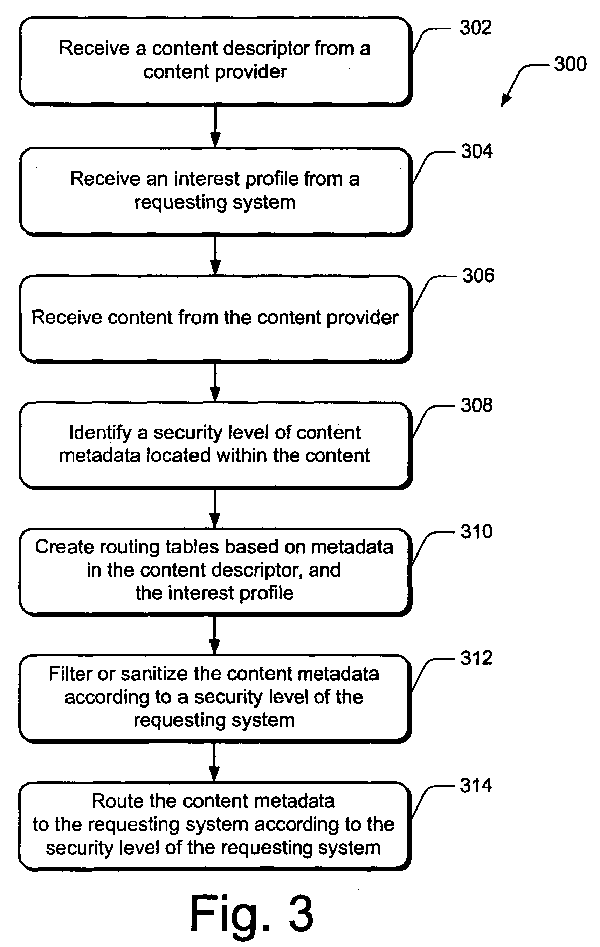

Generally, any of the functions and methods described herein can be implemented using hardware, software, firmware (e.g., fixed logic circuitry), manual processing, or any combination thereof. A software implementation represents program code that performs specified tasks when executed on a computing-based processor. Example method 300 described with reference to Fig. 3 may be described in the general context of computer executable instructions. Generally, computer executable instructions can include services, applications, routines, programs, objects, components, data structures, procedures, modules, functions, and the like that perform particular functions or implement particular abstract data types.

Fig. 3 illustrates an exemplary method 300 for content based routing with high assurance MLS and is described with reference to the exemplary environment 100 shown in Fig. 1. The order in which the method is described is not intended to be construed as a limitation, and any number of the described method blocks can be combined in any order to implement the method, or an alternate method. Furthermore, the method can be implemented in any suitable hardware, software, firmware, or combination thereof.

At block 302, a content descriptor 116 is received from a content provider 104. For example, the content router 110 receives the content descriptor 116 from the content provider 104. At block 304, an interest profile 120 is received from a requesting system 102. For example, the content router 110 receives the interest profile 120 from the requesting system 102. At block 306, content 114 is received from the content provider 104. For example, the security component 108 receives the content 114 from the content provider 104. At block 308, the security level of the content metadata 122 located within the content 114 is identified. For example, the security component 108 identifies the security level of the content metadata 122. In an embodiment, the security component 108 identifies the security level of the content metadata 122 based on a security classification that is defined in a classification guide. In another embodiment, the content metadata 122 is directly received by the requesting system 102 in an event that a security level of the content metadata 122 is not higher than the security level of the requesting system 102. At block 310, routing tables are created based on metadata in the content descriptor 116, and the interest profile 120. For example, the content router 110 creates routing tables based on the metadata in the content descriptor 116, and the interest profile 120. At block 312, the content metadata 122 is filtered and/or sanitized according to a security level of the requesting system 102. For example, the content filter 112 filters and/or sanitizes the content metadata 122 according to the security level of the requesting system 102. At block 314, the content metadata 122 is routed to the requesting system 102 according to the security level of the requesting system 102. For example, the content filter 112 routes the content metadata 122 to the requesting system 102 according to the security level of the requesting system 102.

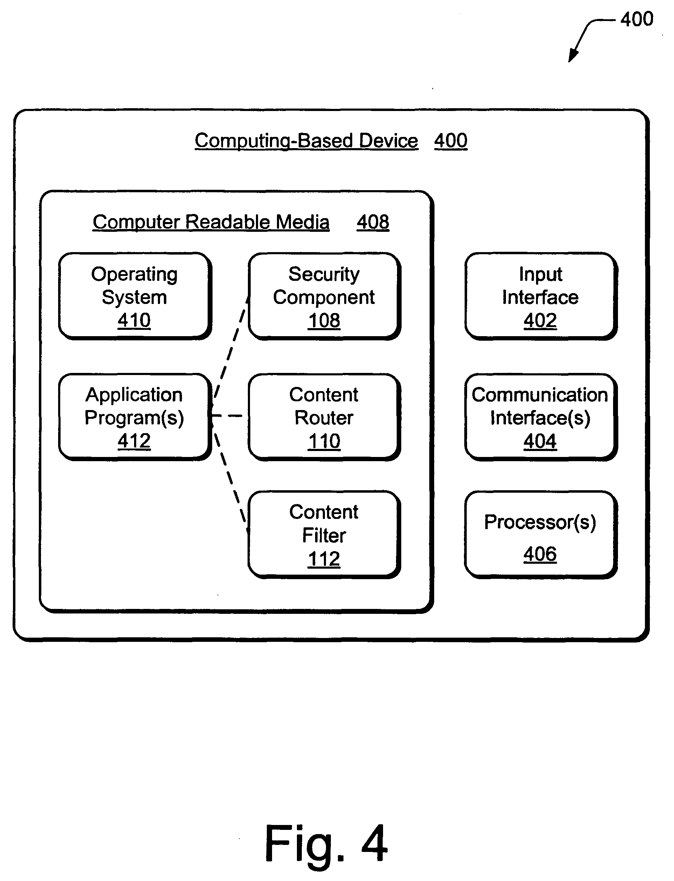

Fig. 4 illustrates an example computing-based device 400 which can be implemented as any form of computing or electronic device in which embodiments of content based routing with high assurance MLS can be implemented. For example, the computing-based device 400 can be implemented to include any one or combination of devices described with reference to the system shown in Fig. 1.

The computing-based device 400 includes an input interface 402 by which data inputs can be received. Device 400 further includes communication interface(s) 404 which can be implemented as any one or more of a wireless interface, any type of network interface, and as any other type of communication interface. The computing-based device 400 also includes one or more processors 406 (e.g., any of microprocessors, controllers, and the like) which process various computer executable instructions to control the operation of computing-based device 400, to communicate with other electronic and computing devices, and to implement embodiments of content based routing with high assurance MLS. Computing-based device 400 can also be implemented with computer readable media 408, such as one or more memory components, examples of which include random access memory (RAM), non-volatile memory (e.g., any one or more of a read-only memory (ROM), flash memory, EPROM, EEPROM, etc.), and a disk storage device. A disk storage device can include any type of magnetic or optical storage device, such as a hard disk drive, a recordable and/or rewriteable compact disc (CD), a DVD, a DVD+RW, and the like.

Computer readable media 408 provides data storage mechanisms to store various information and/or data such as software applications and any other types of information and data related to operational aspects of computing-based device 400. For example, an operating system 410 and/or other application programs 412 can be maintained as software applications with the computer readable media 408 and executed on processor(s) 406 to implement embodiments of content based routing with high assurance MLS. For example, the security component 108, the content router 110, and the content filter 112 can each be implemented as a software application and/or component in various embodiments of content based routing with high assurance MLS.

In addition, although the security component 108, content router 110, and content filter 112 can each be implemented as separate application components, each of the components can themselves be implemented as several component modules or applications distributed to each perform one or more functions in a content based routing with high assurance MLS system. Further, any combination of the security component 108, content router 110, and content filter 112 can be implemented in an alternate embodiment.

Although embodiments of content based routing with high assurance MLS have been described in language specific to structural features and/or methods, it is to be understood that the subject of the appended claims is not necessarily limited to the specific features or methods described. Rather, the specific features and methods are disclosed as exemplary implementations of content based routing with high assurance MLS.

## Claims

1. A content based routing system, comprising:
a requesting system (102) and at least one additional requesting system (202),
a security component (108), a content router (110), and a content filter (112) housed within a multi-level security hardware system (106), wherein
the security component (108) is configured to receive content (114) from a content provider (104) and to identify a security level of content metadata (122) located within the content (114) received from the content provider (104);
the content router (110) is configured to receive a content descriptor (116) from the content provider (104), an interest profile (120) from the requesting system (102) and a further interest profile (204) from the at least one additional requesting system (202), the content router (110) is further configured to utilize algorithms to create routing tables based on metadata in the content descriptors (116), the interest profile (120) and the further interest profile (204), and to provide the content metadata (122) to the requesting system (102) based on the interest profile (120) and to the at least one additional requesting system (202) based on the further interest profile (204); and
the content filter (112) is configured to filter or sanitize the content metadata (122) according to a security level of the requesting system (102) and according to a security level of the at least one additional requesting system (202) before providing the content metadata (122) to the requesting system (102) and the at least one additional requesting system (202), **characterized in that**
the multi-level security hardware system (106) is configured to provide two-way communications for communicating content metadata (122) from a content provider (104) at a low security level to the requesting system (102) at a high security level, and for communicating content metadata (122) from a content provider (104) at a high security level to the at least one additional requesting system (202) at a low security level,
the content router (110) is further configured to multicast the content metadata (122) to the requesting system (102) whose interest profile (120) matches the content metadata (122) in the content descriptor (116) and to the at least one additional requesting system (202) whose further interest profile (204) matches the content metadata (122) in the content descriptor (116), and
the content router (110) is further configured to provide the content metadata (122) directly to the requesting system (102) in an event that the security level of the content metadata (122) is not higher than the security level of the requesting system (102) and to provide the content metadata (122) directly to the at least one additional requesting system (202) in an event that the security level of the content metadata (122) is not higher than the security level of the at least one additional requesting system (202).

2. A content based routing system as recited in claim 1, wherein the security component (108) is further configured to identify the security level of the content metadata (122) based on a security classification that is defined in a classification guide.

3. A content based routing system as recited in claim 1, wherein the security component (108) utilizes a security protocol to communicate the content (114) to the content router (110).

4. A content based routing system as recited in claim 1, wherein the content filter (112) is further configured to utilize MLS guard (106) policies to filter or sanitize the content metadata (122) according to the security level of the requesting system (102).

5. A content based routing system as recited in claim 1, wherein the requesting system (102) is any system that requires inputs from an external source.

6. A content based routing system as recited in claim 1, wherein the content descriptor (116) and the interest profile (120) defines the content (114) and the metadata.

7. A content based routing system as recited in claim 1, wherein the content (114) and the content metadata (122) is at least one of readable text or XML data.

8. A method, comprising:
providing a security component (108), a content router (110), and a content filter (112) housed within a multi-level security hardware system (106);
receiving a content descriptor (116) from a content provider (104) by the content router (110);
receiving an interest profile (120) from a requesting system (102) by the content router (110);
receiving a further interest profile (204) from at least one additional requesting system (202) by the content router (110);receiving content (114) from the content provider (104) by a security component (108) and identifying a security level of the content metadata (122) located within the content (114);
creating routing tables by the content router (110) based on metadata in the content descriptor (116), the interest profile (120), and the further interest profile (204); filtering or sanitizing the content metadata (122) located within the content (114) by the content filter (112) according to a security level of the requesting system (102) and according to a security level of the at least one additional requesting system (202); and
routing the content metadata (122) to the requesting system (102) according to the security level of the requesting system (102) and to the at least one additional requesting system (202) according to the security level of the at least one additional requesting system (204)
**characterized by** further comprising
providing two-way communications by the multi-level security hardware system (106) for communicating content metadata (122) from a content provider (104) at a low security level to the requesting system (102) at a high security level, and for communicating content metadata (122) from a content provider (104) at a high security level to the at least one additional requesting system (202) at a low security level;
multicasting the content metadata (122) to the requesting system (102) whose interest profile (120) matches the content metadata (122) in the content descriptor (116) and to the at least one additional requesting system (202) whose further interest profile (204) matches the content metadata (122) in the content descriptor (116); and
providing the content metadata (122) directly to the requesting system (102) in an event that a security level of the content metadata (122) is not higher than the security level of the requesting system (102)
providing the content metadata (122) directly to the at least one additional requesting system (202) in an event that a security level of the content metadata (122) is not higher than the security level of the at least one additional requesting system (202).

9. A method as recited in claim 8, wherein identifying the content metadata (122) based on a security level that is defined in a classification guide.

10. A method as recited in claim 8, wherein the requesting system (102) is any system that requires inputs from an external source.

## Patentansprüche

1. Inhaltsbasiertes Leitsystem, mit:
einem anfordernden System (102) und mindestens einem zusätzlichen anfordernden System (202),
einer Sicherheitskomponente (108), einem Inhaltsleiter (110) und einem Inhaltsfilter (112), die in einem Mehrebenen-Sicherheits-Hardwaresystem (106) beherbergt sind, wobei
die Sicherheitskomponente (108) dazu ausgebildet ist, Inhalt (114) von einem Inhaltsbereitsteller (104) zu empfangen und eine Sicherheitsebene der Inhaltsmetadaten (122) zu identifizieren, die innerhalb des Inhalts (114) angeordnet sind, der von dem Inhaltsbereitsteller (104) empfangen ist;
der Inhaltsleiter (110) dazu ausgebildet ist, einen Inhaltsbeschreiber (116) von dem Inhaltsbereitsteller (104) zu empfangen, ein Interessenprofil (120) von dem anfordernden System (102) zu empfangen und ein weiteres Interessenprofil (204) von dem mindestens einen zusätzlichen anfordernden System (202) zu empfangen, wobei der Inhaltsleiter (110) des Weiteren dazu ausgebildet ist, Algorithmen zu nutzen, um Leittabellen basierend auf Metadaten in den Inhaltsbeschreibern (116), dem Interessenprofil (120) und dem weiteren Interessenprofil (204) zu erzeugen und die Inhaltsmetadaten (122) an das anfordernde System (102) basierend auf dem Interessenprofil (120) und zu dem mindestens einen zusätzlichen anfordernden System (202) basierend auf dem weiteren Interessenprofil (204) bereitzustellen; und
der Inhaltsfilter (112) dazu ausgelegt ist, die Inhaltsmetadaten (122) gemäß einer Sicherheitsebene des anfordernden Systems (102) und gemäß einer Sicherheitsebene des mindestens einen zusätzlichen anfordernden Systems (202) zu filtern oder reinigen vor dem Bereitstellen der Inhaltsmetadaten (122) an das anfordernde System (102) und das mindestens eine zusätzliche anfordernde System (202), **dadurch gekennzeichnet, dass**
das Mehrebenen-Sicherheits-Hardwaresystem (106) dazu ausgebildet ist, Zwei-Wege-Kommunikationen zum Kommunizieren von Inhaltsmetadaten (122) von einem Inhaltsbereitsteller (104) auf einer niedrigen Sicherheitsebene zu dem anfordernden System (102) auf einer hohen Sicherheitsebene bereitzustellen und zum Kommunizieren von Inhaltsmetadaten (122) von einem Inhaltsbereitsteller (104) auf einer hohen Sicherheitsebene zu dem mindestens einen zusätzlichen anfordernden System (202) auf einer niedrigen Sicherheitsebene,
der Inhaltsleiter (110) des Weiteren dazu ausgebildet ist, die Inhaltsmetadaten (122) an das anfordernden System (102), dessen Interessenprofil (120) zu den Inhaltsmetadaten (122) in dem Inhaltsbeschreiber (116) passt und zu dem mindestens einen zusätzlichen anfordernden System (202), dessen weiteres Interessenprofil (204) zu den Inhaltsmetadaten (122) in dem Inhaltsbeschreiber (116) passt, zu verteilen bzw. zu multicasten, und
der Inhaltsleiter (110) des Weiteren dazu ausgebildet ist, die Inhaltsmetadaten (122) direkt zu dem anfordernden System (102) in dem Fall bereitzustellen, dass die Sicherheitsebene der Inhaltsmetadaten (122) nicht höher ist als die Sicherheitsebene des anfordernden Systems (102), und die Inhaltsmetadaten (122) direkt zu dem mindestens einen zusätzlichen anfordernden System (202) in dem Fall bereitzustellen, dass die Sicherheitsebene der Inhaltsmetadaten (122) nicht höher ist als die Sicherheitsebene des mindestens einen zusätzlichen anfordernden Systems (202).

2. Inhaltsbasiertes Leitsystem nach Anspruch 1, wobei die Sicherheitskomponente (108) des Weiteren dazu ausgebildet ist, die Sicherheitsebene der Inhaltsmetadaten (122) basierend auf einer Sicherheitsklassifikation zu identifizieren, die in einer Klassifikationsrichtlinie definiert ist.

3. Inhaltsbasiertes Leitsystem nach Anspruch 1, wobei die Sicherheitskomponente (108) ein Sicherheitsprotokoll nutzt, um den Inhalt (114) zu dem Inhaltsleiter (110) zu kommunizieren.

4. Inhaltsbasiertes Leitsystem nach Anspruch 1, wobei der Inhaltsfilter (112) des Weiteren dazu ausgebildet ist, MLS-Schutzleitlinien (106) zu nutzen, um die Inhaltsmetadaten (122) gemäß der Sicherheitsebene des anfordernden Systems (102) zu filtern oder zu reinigen.

5. Inhaltsbasiertes Leitsystem nach Anspruch 1, wobei das anfordernde System (102) irgendein System ist, das eine Eingabe für eine externe Quelle erfordert.

6. Inhaltsbasiertes Leitsystem nach Anspruch 1, wobei der Inhaltsbeschreiber (116) und das Interessenprofil (120) den Inhalt (114) und die Metadaten definiert.

7. Inhaltsbasiertes Leitsystem nach Anspruch 1, wobei der Inhalt (114) und die Inhaltsmetadaten (122) mindestens eines von lesbarem Text oder XML-Daten ist.

8. Verfahren, mit den folgenden Schritten:
Bereitstellen einer Sicherheitskomponente (108), eines Inhaltsleiters (110) und eines Inhaltsfilters (112), die innerhalb eines Mehrebenen-Sicherheits-Hardwaresystems (106) beherbergt sind;
Empfangen eines Inhaltsbeschreibers (116) von einem Inhaltsbereitsteller (104) durch den Inhaltsleiter (110);
Empfangen eines Interessenprofils (120) von einem anfordernden System (102) durch den Inhaltsleiter (110);
Empfangen eines weiteren Interessenprofils (204) von mindestens einem zusätzlichen anfordernden System (202) durch den Inhaltsleiter (110); Empfangen von Inhalt (114) von dem Inhaltsbereitsteller (104) durch eine Sicherheitskomponente (108) und Identifizieren einer Sicherheitsebene von den Inhaltsmetadaten (122), die in dem Inhalt (114) angeordnet sind;
Erzeugen von Leittabellen durch den Inhaltsleiter (110) basierend auf Metadaten in dem Inhaltsbeschreiber (116), dem Interessenprofil (120) und dem weiteren Interessenprofil (204); Filtern oder Reinigen der Inhaltsmetadaten (122), die in dem Inhalt (114) durch den Inhaltsfilter (112) angeordnet sind, gemäß einer Sicherheitsebene des anfordernden Systems (102) und gemäß einer Sicherheitsebene des mindestens einen zusätzlichen anfordernden Systems (202); und
Leiten der Inhaltsmetadaten (122) zu dem anfordernden System (102) gemäß der Sicherheitsebene des anfordernden Systems (102) und zu dem mindestens einen zusätzlichen anfordernden Systems (202) gemäß der Sicherheitsebene von dem mindestens einen zusätzlichen anfordernden System (204),
**gekennzeichnet durch** die folgenden Schritte:
Bereitstellen von Zwei-Wege-Kommunikationen **durch** das Mehrebenen-Sicherheits-Hardwaresystem (106) zum Kommunizieren von Inhaltsmetadaten (122) von einem Inhaltsbereitsteller (104) auf einem einer niedrigen Sicherheitsebene zu dem anfordernden System (102) auf einer hohen Sicherheitsebene, und zum Kommunizieren von Inhaltsmetadaten (122) von einem Inhaltsbereitsteller (104) auf einer hohen Sicherheitsebene zu dem mindestens einen zusätzlichen anfordernden System (202) auf einer niedrigen Sicherheitsebene;
Multicasten bzw. Verteilen der Inhaltsmetadaten (122) zu dem anfordernden System (102), dessen Interessenprofil (120) zu den Inhaltsmetadaten (122) in dem Inhaltsbeschreiber (116) passt und zu dem mindestens einen zusätzlichen anfordernden System (202), dessen weiteres Interessenprofil (204) zu den Inhaltsmetadaten (122) in dem Inhaltsbeschreiber (116) passt; und
Bereitstellen der Inhaltsmetadaten (122) direkt zu dem anfordernden System (102) in dem Fall, dass eine Sicherheitsebene der Inhaltsmetadaten (122) nicht höher ist als eine Sicherheitsebene des anfordernden Systems (102),
Bereitstellen der Inhaltsmetadaten (122) direkt zu dem mindestens einen zusätzlichen anfordernden System (202) in dem Fall, dass eine Sicherheitsebene der Inhaltsmetadaten (122) nicht höher ist als die Sicherheitsebene des mindestens einen zusätzlichen anfordernden Systems (202).

9. Verfahren nach Anspruch 8, wobei das Identifizieren der Inhaltsmetadaten (122) basiert auf einer Sicherheitsebene, die in einer Klassifizierungsrichtlinie definiert ist.

10. Verfahren nach Anspruch 8, wobei das anfordernde System (102) jegliches System ist, das eine Eingabe von einer externen Quelle erfordert.

## Revendications

1. Système de routage basé sur le contenu, comprenant :
un système de requête (102) et au moins un système de requête supplémentaire (202),
un composant de sécurité (108), un routeur de contenu (110), et un filtre de contenu (112) hébergés dans un système matériel de sécurité multiniveaux (106),
dans lequel
le composant de sécurité (108) est configuré pour recevoir un contenu (114) à partir d'un fournisseur de contenu (104) et identifier un niveau de sécurité de métadonnées de contenu (122) situées dans le contenu (114) reçu depuis le fournisseur de contenu (104) ;
le routeur de contenu (110) est configuré pour recevoir un descripteur de contenu (116) depuis le fournisseur de contenu (104), un profil d'intérêt (120) depuis le système de requête (102) et un autre profil d'intérêt (204) depuis l'au moins un système de requête supplémentaire (202), le routeur de contenu (110) est configuré en outre pour utiliser des algorithmes afin de créer des tables de routage basées sur des métadonnées dans les descripteurs de contenu (116), le profil d'intérêt (120) et l'autre profil d'intérêt (204), et fournir les métadonnées de contenu (122) au système de requête (102) en fonction du profil d'intérêt (120) et à l'au moins un système de requête supplémentaire (202) en fonction de l'autre profil d'intérêt (204) ; et
le filtre de contenu (112) est configuré pour filtrer ou assainir les métadonnées de contenu (122) conformément à un niveau de sécurité du système de requête (102) et conformément à un niveau de sécurité de l'au moins un système de requête supplémentaire (202) avant de fournir les métadonnées de contenu (122) au système de requête (102) et à l'au moins un système de requête supplémentaire (202), **caractérisé en ce que**
le système matériel de sécurité multiniveaux (106) est configuré pour assurer des communications bidirectionnelles pour communiquer des métadonnées de contenu (122) depuis un fournisseur de contenu (104) situé à un niveau de sécurité bas au système de requête (102) situé à un niveau de sécurité haut, et pour communiquer des métadonnées de contenu (122) depuis un fournisseur de contenu (104) situé à un niveau de sécurité haut à l'au moins un système de requête supplémentaire (202) situé à un niveau de sécurité bas,
le routeur de contenu (110) est configuré en outre pour multidiffuser les métadonnées de contenu (122) au système de requête (102) dont le profil d'intérêt (120) correspond aux métadonnées de contenu (122) dans le descripteur de contenu (116) et à l'au moins un système de requête supplémentaire (202) dont l'autre profil d'intérêt (204) correspond aux métadonnées de contenu (122) dans le descripteur de contenu (116), et
le routeur de contenu (110) est configuré en outre pour fournir les métadonnées de contenu (122) directement au système de requête (102) au cas où le niveau de sécurité des métadonnées de contenu (122) n'est pas supérieur au niveau de sécurité du système de requête (102) et fournir les métadonnées de contenu (122) directement à l'au moins un système de requête supplémentaire (202) dans le cas où le niveau de sécurité des métadonnées de contenu (122) n'est pas supérieur au niveau de sécurité de l'au moins un système de requête supplémentaire (202).

2. Système de routage basé sur le contenu selon la revendication 1, dans lequel le composant de sécurité (108) est configuré en outre pour identifier le niveau de sécurité des métadonnées de contenu (122) en fonction d'une classification de sécurité qui est définie dans un guide de classification.

3. Système de routage basé sur le contenu selon la revendication 1, dans lequel le composant de sécurité (108) utilise un protocole de sécurité pour communiquer le contenu (114) au routeur de contenu (110).

4. Système de routage basé sur le contenu selon la revendication 1, dans lequel le filtre de contenu (112) est configuré en outre pour utiliser des stratégies de garde MLS (106) pour filtrer ou assainir les métadonnées de contenu (122) en fonction du niveau de sécurité du système de requête (102).

5. Système de routage basé sur le contenu selon la revendication 1, dans lequel
le système de requête (102) est n'importe quel système qui requiert des entrées depuis une source externe.

6. Système de routage basé sur le contenu selon la revendication 1, dans lequel le descripteur de contenu (116) et le profil d'intérêt (120) définissent le contenu (114) et les métadonnées.

7. Système de routage basé sur le contenu selon la revendication 1, dans lequel le contenu (114) et les métadonnées de contenu (122) sont au moins l'un d'un texte lisible ou de données XML.

8. Procédé, comprenant :
la fourniture d'un composant de sécurité (108), d'un routeur de contenu (110), et d'un filtre de contenu (112) hébergés dans un système matériel de sécurité multiniveaux (106),
la réception d'un descripteur de contenu (116) depuis un fournisseur de contenu (104) par le routeur de contenu (110) ;
la réception d'un profil d'intérêt (120) depuis un système de requête (102) par le routeur de contenu (110) ;
la réception d'un autre profil d'intérêt (204) depuis l'au moins un système de requête supplémentaire (202) par le routeur de contenu (110) ; la réception d'un contenu (114) depuis le fournisseur de contenu (104) par un composant de sécurité (108) et l'identification d'un niveau de sécurité des métadonnées de contenu (122) situées dans le contenu (114) ;
la création de tables de routage par le routeur de contenu (110) basées sur des métadonnées dans le descripteur de contenu (116), le profil d'intérêt (120) et l'autre profil d'intérêt (204) ; le filtrage ou l'assainissement des métadonnées de contenu (122) situées dans le contenu (114) par le filtre de contenu (112) conformément à un niveau de sécurité du système de requête (102) et conformément à un niveau de sécurité de l'au moins un système de requête supplémentaire (202) ; et
le routage des métadonnées de contenu (122) jusqu'au système de requête (102) conformément au niveau de sécurité du système de requête (102) et jusqu'à l'au moins un système de requête supplémentaire (202) conformément au niveau de sécurité de l'au moins un système de requête supplémentaire (204)
**caractérisé en ce qu'**il comprend en outre
la mise en oeuvre de communications bidirectionnelles par le système matériel de sécurité multiniveaux (106) pour communiquer des métadonnées de contenu (122) depuis un fournisseur de contenu (104) situé à un niveau de sécurité bas au système de requête (102) situé à un niveau de sécurité haut, et pour communiquer des métadonnées de contenu (122) depuis un fournisseur de contenu (104) situé à un niveau de sécurité haut à l'au moins un système de requête supplémentaire (202) situé à un niveau de sécurité bas,
la multidiffusion des métadonnées de contenu (122) au système de requête (102) dont le profil d'intérêt (120) correspond aux métadonnées de contenu (122) dans le descripteur de contenu (116) et à l'au moins un système de requête supplémentaire (202) dont l'autre profil d'intérêt (204) correspond aux métadonnées de contenu (122) dans le descripteur de contenu (116), et
la fourniture des métadonnées de contenu (122) directement au système de requête (102) au cas où un niveau de sécurité des métadonnées de contenu (122) n'est pas supérieur au niveau de sécurité du système de requête (102) la fourniture des métadonnées de contenu (122) directement à l'au moins un système de requête supplémentaire (202) dans le cas où un niveau de sécurité des métadonnées de contenu (122) n'est pas supérieur au niveau de sécurité de l'au moins un système de requête supplémentaire (202).

9. Procédé selon la revendication 8, dans lequel le niveau de sécurité des métadonnées de contenu (122) est identifié en fonction d'un niveau de sécurité qui est défini dans un guide de classification.

10. Procédé selon la revendication 8, dans lequel le système de requête (102) est n'importe quel système qui requiert des entrées depuis une source externe.
